# EUROPEAN PATENT SPECIFICATION

(11) **EP 3 653 858 B1**
(45) Date of publication and mention of the grant of the patent: **27.09.2023**
(21) Application number: 19208322.8
(22) Date of filing: 11.11.2019
(51) Int. Cl.: F02C 6/18

(54) **MICROSCALE DISTRIBUTED ENERGY COGENERATION METHOD AND SYSTEM**
MIKROSKALIGES VERTEILTES KRAFT-WÄRME-KOPPLUNGSVERFAHREN UND -SYSTEM
PROCÉDÉ DE COGÉNÉRATION D'ÉNERGIE DISTRIBUÉE À MICRO-ÉCHELLE ET SYSTÈME

(30) Priority: 13.11.2018 US 201816190062
(43) Date of publication of application: 20.05.2020
(73) Proprietor: Galileo Technologies Corporation, Arcadia, California 91006 (US)
(72) Inventor: DEL CAMPO, Osvaldo, BI1674AOA Buenos Aires (AR)
(74) Representative: Soldatini, Andrea

(56) References cited:
- US-A1- 2004 020 206
- US-A1- 2006 187 593
- US-A1- 2007 084 205
- US-A1- 2007 137 215
- US-A1- 2015 128 557

## Description

### CROSS-REFERENCE TO PRIORITY APPLICATION

This application is a Continuation-In-Part, which claims priority to United States Non-Provisional Utility Patent Application Serial No. 14/075,607 filed on November 08, 2013.

### FIELD OF THE INVENTION

The present invention relates generally to energy generating systems. More specifically, the present invention relates to a microscale energy cogeneration system that can be used in a residential setting to supplement or substitute for a conventional utility electrical supply system and, further, can be used as part of an energy supply network. Even more particularly, the present invention is referred to as a distributed energy cogeneration method with which it is possible to generate electricity and heat water and air.

### DESCRIPTION OF RELATED ART

Cogeneration is a highly efficient means of generating heat and electric power at the same time from the same energy source. Displacing fossil fuel combustion with heat that would normally be wasted in the process of power generation reaches efficiencies that can triple, or even quadruple, conventional power generation. In general, cogeneration systems are adapted to generate both electricity and heat from a single energy source. Such a cogeneration system can recover exhaust gas heat or waste heat of cooling water generated from an engine or turbine during an electricity generation operation, so that the cogeneration system can achieve an increase in energy efficiency of 70 to 80% over other systems.

By virtue of such an advantage, the cogeneration system has recently been highlighted as an electricity and heat supply source for buildings. In particular, the cogeneration system exhibits highly-efficient energy utilization in that the recovered waste heat is mainly used to heat/cool a confined space and to heat water. Although cogeneration has been in use for nearly a century, in the mid-1980s relatively low natural gas prices made it a widely attractive alternative for new power generation. In fact, gas-fired cogeneration is largely responsible for the decline in conventional power plant construction that occurred in North America during the 1980s. Cogeneration accounted for a large proportion of all new power plant capacity built in North America during much of the period in the late 1980s and early 1990s.

Cogeneration equipment can be fired by fuels other than natural gas. There are installations in operation that use wood, agricultural waste, peat moss, and a wide variety of other fuels, depending on local availability.

The environmental implications of cogeneration stem not just from its inherent efficiency, but also from its decentralized character. Because it is impractical to transport heat over any distance, cogeneration equipment must be located physically close to its heat user. A number of environmentally positive consequences flow from this fact: power tends to be generated close to the power consumer, reducing transmission losses, stray current, and the need for distribution equipment significantly. Cogeneration plants tend to be built smaller, and to be owned and operated by smaller and more localized companies than simple cycle power plants. As a general rule, they are also built closer to populated areas, which cause them to be held to higher environmental standards. In northern Europe, and increasingly in North America, cogeneration is at the heart of district heating and cooling systems. District heating combined with cogeneration has the potential to reduce human greenhouse gas emissions by more than any other technology except public transportation.

To understand cogeneration, it is necessary to know that most conventional power generation is based on burning a fuel to produce steam. It is the pressure of the steam which actually turns the turbines and generates power, in an inherently inefficient process. Because of a basic principle of physics, no more than one third of the energy of the original fuel can be converted to the steam pressure which generates electricity. Cogeneration, in contrast, makes use of the excess heat, usually in the form of relatively low-temperature steam exhausted from the power generation turbines. Such steam is suitable for a wide range of heating applications, and effectively displaces the combustion of carbon-based fuels, with all their environmental implications.

Today, existing electric generating technologies include large scale steam turbines producing electricity with a relatively low efficiency rate. The large scale steam turbines often emit undesirable byproducts, such as sulfur oxides, nitrous oxides, ashes, and mercury. Additionally, these large scale steam turbines release a large amount of heat, which is generally released into lakes often disrupting the environment.

More recently, it has been found that smaller scale turbines, such as micro-turbines, fueled by natural gas can operate with greater efficiency. During operation, the micro-turbines do not pollute to the same degree as large scale steam turbines and instead elements such as carbon dioxide and water are emitted, with only very low amounts of nitrogen oxides. Additionally, the heat recovery from operation of the micro-turbines is useful for heating water.

In many parts of the world there is a lack of electrical infrastructure. Installation of transmission and distribution lines to deliver the product to the consumer is very costly, especially in third world countries. Moreover, the electrical infrastructure in many countries is antiquated and overworked, resulting in "brownouts" and "blackouts." Consequently, there is a need for an energy generating system that can produce energy in a standalone system or that can be integrated into existing systems.

Even though there are several cogeneration systems in the market, all of them involve an important investment that makes this technology inaccessible for home owner users or portable applications. Also, it is very costly to escalate these types of systems, as the installation of several turbines together to supply a bigger demand or interconnecting a set of turbines for balancing out the generation of electricity in a determined area is not yet possible.

Therefore, even though the above cited technologies of the prior art address some of the energy generation needs of the market, a new, improved and economical microscale energy cogeneration system is still desired.
US2007084205A1 discloses a power plant with a CHP system having a distillation apparatus to yield a high thermally efficient electrical power plant for reduced fuel usage and subsequent lower CO₂ emission specie.
US20070137215A1 discloses a cogeneration system which is capable of reliably switching a bypass damper even if a supply of electric power is shut off in an abnormal state etc. and which is unlikely to leak exhaust gas and is cost-effective even if it is increased in size.
US20040020206A1 discloses a power generation system including a prime mover subsystem and a Rankine-cycle heat energy utilization subsystem. The waste heat stream from the prime mover subsystem provides sufficient thermal content to power the heat energy utilization subsystem.

### BRIEF SUMMARY OF THE INVENTION

This invention is directed to a microscale energy cogeneration system that can be used independently of a conventional utility electrical supply system or can be integrated into a conventional electrical supply system to supplement the system or contribute to the energy supply as part of a network.

In one form of the invention, a microscale energy cogeneration method includes steps of converting the energy produced by the combustion chamber into mechanical energy and converting the mechanical energy produced by the turbine into electrical energy.

An important aspect of the present invention is a microscale energy cogeneration system designed to produce between 1 to 5 kWh, more particularly 1 to 3 kWh, and more specifically 3 kWh using a portable and modular unit.

It is an object of the present invention to provide a microscale energy cogeneration system that is capable of heating tap water and heating air at the same time with high efficiency.

In another aspect of the invention, the generator may be an electric generator producing alternating electric current during the operation of the microscale energy cogeneration system. The fuel for the microscale energy cogeneration system may be natural gas, diesel, gasoline, and liquefied petroleum gas (LPG), among others.

According to another aspect of the invention, the microscale energy cogeneration system further includes an exhaust passage downstream from the micro/nano-turbine delivering high temperature exhaust air from the micro/nano-turbine and a heat exchanger receiving the high temperature exhaust air for heat transfer. A water heating system for converting tap water into hot water is coupled to a heat exchange exhaust for releasing lower temperature exhaust air. The system is modular and portable and is able to generate electricity, hot water and hot air at the same time with efficiency higher than 85%.

In yet another aspect of the invention, the microscale energy cogeneration system may include another heat exchanger for coupling the present system to the heating system of a house.

In yet another aspect of the invention, the microscale energy cogeneration system may be scaled up to form a set of interconnected micro/nano-turbines that can be used to provide the same user with more energy or to balance out the energy demand of a group of houses in a residential area.

In another aspect of the invention, the microscale energy cogeneration system is portable or may be compatible for integration with a plurality of energy systems to provide the electrical distribution system with power and further may be configured for integration into a heating system, a cooling system and/or a water heating system.

Another aspect of the present invention provides a microscale energy cogeneration system that creates an energy source that produces efficient and clean electric energy, produces heat for heating, produces hot water, does not create pollution or vibrations, and does not need any maintenance over the years.

Also another aspect of this invention comprises a microscale energy cogeneration system that is smart, modular and portable, which can be managed remotely through Internet.

Also another aspect of this invention comprises a microscale energy cogeneration system that has a 3 kWh, 110/220 V AC, 12/24 VDC output, using different fuels including natural gas, diesel, gasoline and LPG.

Also another aspect of this invention consists of a microscale energy cogeneration system that generates electricity, 100 liters of hot water per hour, and hot air for heating a building.

In summary, the present invention is related to a microscale energy cogeneration method according to claim 11.

Also, the present invention is related to a microscale energy cogeneration system according to claim 1.

Also the present invention is related to a microscale distributed energy cogeneration method comprising the steps of:
(a) Connecting a fuel provider to a micro/nano-turbine,
(b) Connecting the micro/nano-turbine to a micro electric generator;
(c) Connecting the micro electric generator to the electrical grid of a facility.
(d) Connecting a heat exchanger apparatus to an exhaust passage downstream from the micro/nano-turbine, and
(e) Connecting the heating system of the house to the heat exchanger apparatus.

These and other aspects, features, and advantages of the present invention will become more readily apparent from the attached drawings and the detailed description of the preferred embodiments, which follow.

### BRIEF DESCRIPTION OF THE SEVERAL VIEWS OF THE DRAWINGS

The preferred embodiments of the invention will hereinafter be described in conjunction with the appended drawings provided to illustrate and not to limit the invention, where like designations denote like elements, and in which:
FIG. 1 presents front, side perspective view of an exemplary micro/nano-turbine driven energy generating system in accordance with the present invention;
FIG. 2 presents a side elevation view of the micro/nano-turbine driven energy generating system, originally introduced in FIG. 1;
FIG. 3 presents a rear elevation view of the micro/nano-turbine driven energy generating system, originally introduced in FIG. 1;
FIG. 4 presents a top plan view of the micro/nano-turbine driven energy generating system, originally introduced in FIG. 1;
FIG. 5 presents a front elevation view of the micro/nano-turbine driven energy generating system, originally introduced in FIG. 1;
FIG. 6 presents an isometric view of the micro/nano-turbine driven energy generating system in combination with a water processing system and an air heating system installed within a household application through which tap water and/or air is heated using exhaust gases of the micro/nano-turbine;
FIG. 7 presents an isometric view of the micro/nano-turbine driven energy generating system, originally introduced in FIG. 1, the illustration introducing functional components of the micro/nano-turbine;
FIG. 8 presents an isometric view of the water processing system, originally introduced in FIG. 6, the illustration introducing functional components of the water processing system;
FIG. 9 presents an isometric view of the air heating system, originally introduced in FIG. 6, the illustration introducing functional components of the air heating system;
FIG. 10 presents an operational schematic diagram, representative of the micro/nano-turbine energy generating system in combination with the water processing system and the air heating system in accordance with the arrangement of the energy generating system originally introduced in FIG. 6; and
FIG. 11 presents a schematic view of an energy generating system connected to the power grid with which the different energy generating systems may interact with the grid by taking energy if the particular application requires so, or may provide the grid with energy if the application is not requiring energy.

### DETAILED DESCRIPTION OF THE INVENTION

The following detailed description is merely exemplary in nature and is not intended to limit the described embodiments or the application and uses of the described embodiments. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to make or use the embodiments of the disclosure and are not intended to limit the scope of the disclosure, which is defined by the claims.

Furthermore, there is no intention to be bound by any expressed or implied theory presented in the preceding technical field, background, brief summary or the following detailed description. It is also to be understood that the specific devices illustrated in the attached drawings, and described in the following specification, are simply exemplary embodiments of the inventive concepts defined in the appended claim. Hence, specific dimensions and other physical characteristics relating to the embodiments disclosed herein are not to be considered as limiting, unless the claims expressly state otherwise.

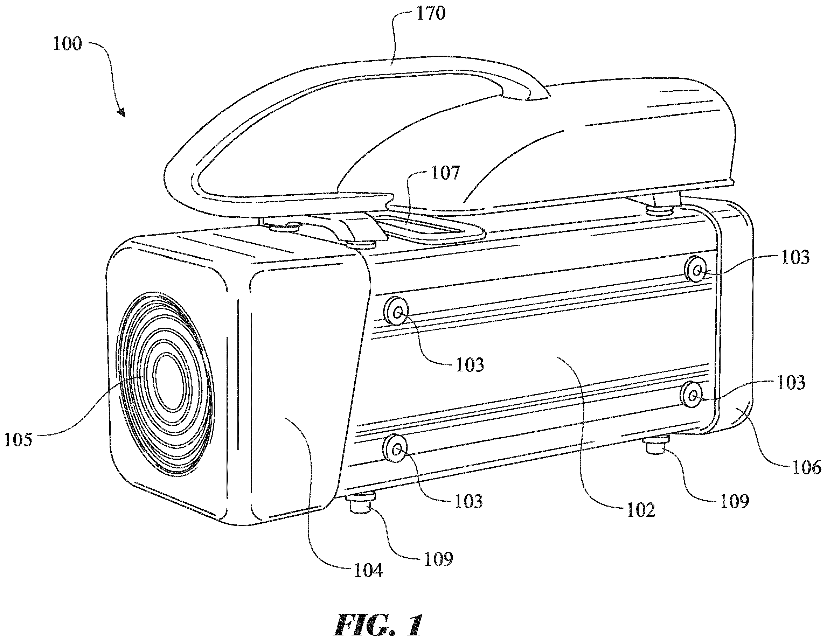

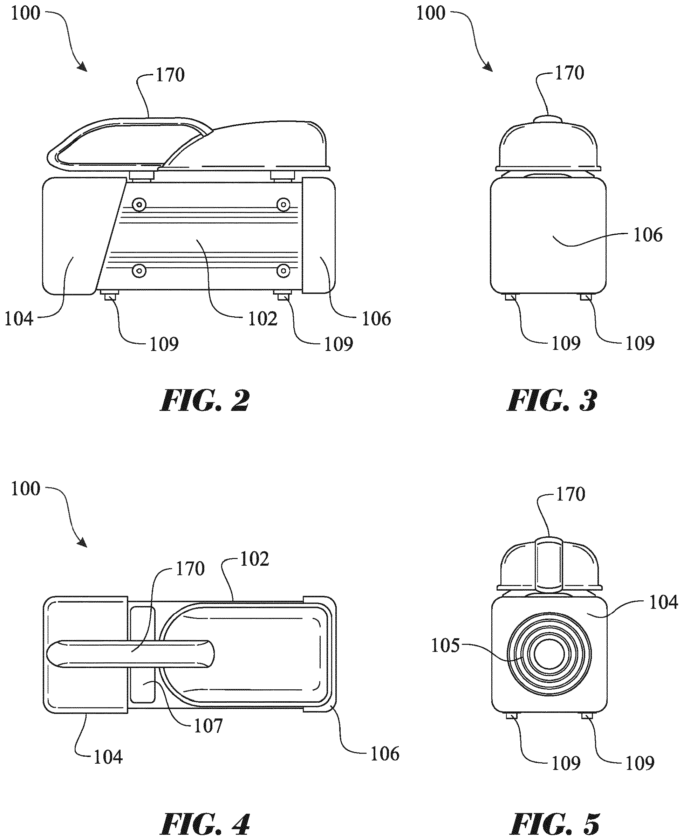

The present invention is referred to an exemplary microscale energy cogeneration system 100, as illustrated in FIGS. 1 through 5 and 7.

The microscale energy cogeneration system 100 is of a size and design enabling portability, being easily transportable between locations. Its general compact size, its light weight and can include a handle 170, which is especially useful for that purpose. The micro/nano-turbine 122 is preferably dimensioned such that it may be portable and has an output in a range to 1 to 5 kilowatts per hour and more preferably in a range of 2 to 4 kWh. In addition, the micro/nano-turbine 122 may be configured to have an efficiency of at least 70%, more preferably at least 80%, and more typically, in a range of 80% to 86%.

The present microscale energy cogeneration system 100 is compatible for integration with other energy systems and systems requiring energy, as explained below.

Gaseous heat energy is provided from the combustor chamber 150 to the micro/nano-turbine 122, which converts the provided gaseous heat energy into mechanical energy. The turbine 122 rotates an micro electric generator 124. The rotational motion of the micro electric generator 124 converts this mechanical energy into a generated electrical power output 132. The generated electrical power output 132 created can be supplied to an electrical grid of a home or house, an electrical grid of a group of houses, a building, a business, a group of business, a hybridizing car, a boat, an outdoor application, or any other electric power consuming entity.

The microscale energy cogeneration system 100 includes an energy generating system housing 102. The energy generating system housing 102 is preferably fabricated of a section of an extruded, hollow stock of material, such as aluminum. Various features are machined into the section of extruded stock. This can include a series of features to receive component mounting hardware 103, such as bolts, screws, rivets, brackets, and the like to assembly operational components to the energy generating system housing 102. Another feature can include a series of features for assembly of a series of energy generating system feet 109. Each energy generating system foot 109 is preferably fabricated of a pliant material, such as rubber, wherein the pliancy is provided to absorb vibrations generated during operation of the microscale energy cogeneration system 100. The series of energy generating system feet 109 can be individually assembled to the energy generating system housing 102 or assembled to a supporting bracket, wherein the supporting bracket is then assembled to the energy generating system housing 102. It is preferred that the series of energy generating system feet 109 be assembled directly or indirectly to a lower or bottom panel of the energy generating system housing 102, a lower or bottom portion of the frontal end cap 104, and/or a lower or bottom portion of the rear end cap 106. Alternatively, the feet 109 can be integrally formed in the frontal end cap 104 and the rear end cap 106.

A frontal end cap 104, preferably comprising a ventilation grill 105, is secured to a front end of the energy generating system housing 102. A frontal end cap 104 is secured to a front end of the energy generating system housing 102. Each of the frontal end cap 104 and the rear end cap 106 are preferably slideably assembled to an exterior surface of the energy generating system housing 102. The frontal end cap 104 and the rear end cap 106 can then be secured to the energy generating system housing 102 by any suitable method, such as an adhesive, one or more mechanical fasteners, a mechanical interference, and the like. It is preferred that at least one of the frontal end cap 104 and the rear end cap 106 is removably assembled to the energy generating system housing 102. The removability of the at least one of the frontal end cap 104 and the rear end cap 106 from the energy generating system housing 102 enables access to the operational components for servicing and/or repairs.

A handle 170 or a handle assembly 170 is assembled to the energy generating system housing 102 (as shown), the frontal end cap 104 and/or the rear end cap 106. It is preferred that the handle 170 be removable from the energy generating system housing 102. This eases access to the heated air exhaust port 107.

The energy generating system housing 102 introduces a heated air exhaust port 107. The heated air exhaust port 107 is preferably formed through an upper panel of the energy generating system housing 102, as the heated air exhaust port 107 is designed to transfer heat, and the optimal location would be along an upper panel of the energy generating system housing 102, as heat naturally rises. An exhaust transfer element 108 can be assembled to the upper panel of the energy generating system housing 102 providing a conduit for the heated gases passing through the exhaust transfer element 108 to another unit. The exhaust transfer element 108 can be removable to accommodate the handle 170.

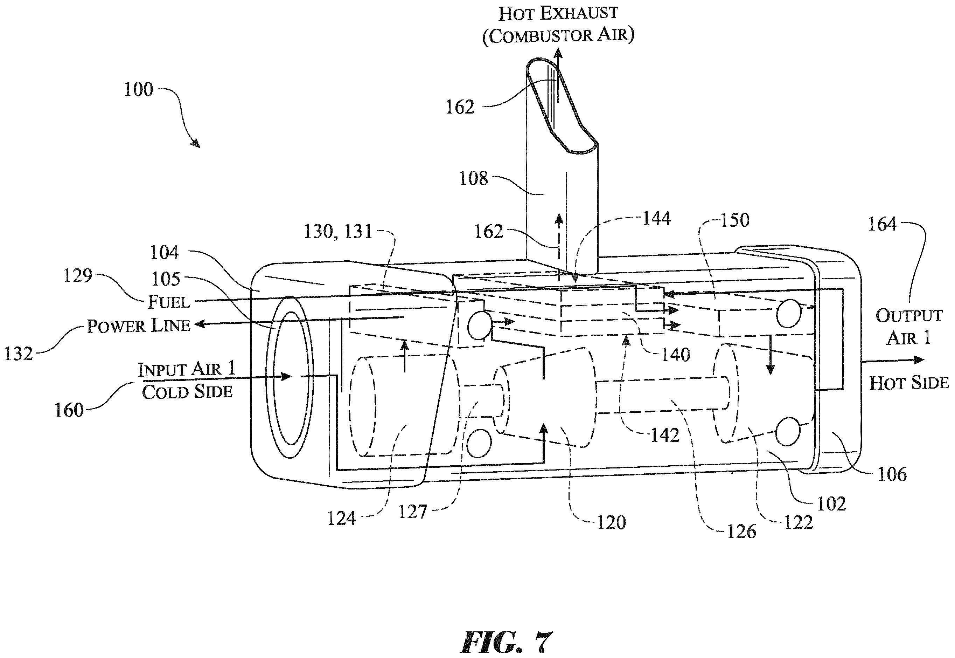

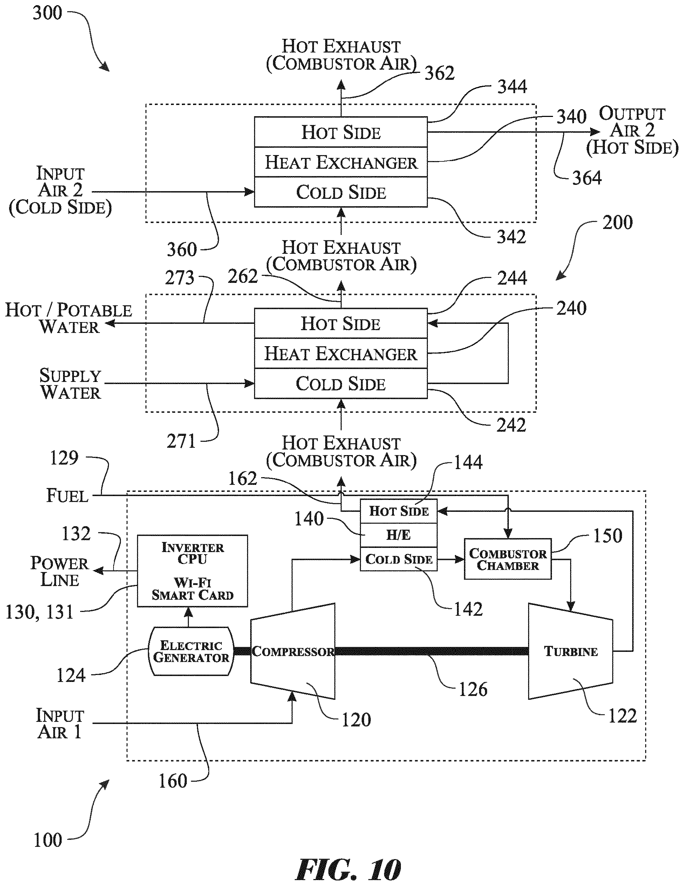

Operational components of the microscale energy cogeneration system 100 are illustrated in an isometric schematic illustration presented in FIG. 7 and a schematic diagram illustrated in FIG. 10. Operational components include a compressor 120, a micro/nano-turbine 122, an micro electric generator 124, a heat exchanger 140, and a combustor chamber 150. An inverter central processing unit (CPU) 130 and a Wired or wireless communication circuit 131 can be included to providing electrical management of generated power and, separately of interest, a communication link to provide information to a support system, service personal, a third party, or any other desired recipient.

The micro/nano-turbine 122 drives the system. The micro/nano-turbine 122 is rotationally coupled to a compressor 120 by a turbine shaft 126. The micro electric generator 124 is rotationally coupled to either the compressor 120 and/or the micro/nano-turbine 122 by a generator shaft 127. The turbine shaft 126 and the generator shaft 127 can be a continuous shaft, separate shafts, separate shaft segments coupled by a universal joint, and the like. Gears, transmission or any other rotational conversion element (not shown) can be integrated between any two or each of the three rotating elements 120, 122, 124 to modify a rotational speed, a torque, or to suit any other design element. Support of each of these elements would be provided in accordance with any known suitable operational component support design, including brackets, bearings, bushings, mechanical fasteners, adjustable features, and the like. Specific details of compressor 120, the micro/nano-turbine 122, and the micro electric generator 124 are not provided as they do not form part of the present invention. Any suitable compressor 120, any suitable micro/nano-turbine 122, and any suitable micro electric generator 124 that are available in the market can be used in the microscale energy cogeneration system 100.

A fuel supply 129 is provided to a combustor chamber 150, where the fuel is used to generate a rotational force causing a rotational motion of the micro/nano-turbine 122. The fuel 129 can be natural gas, diesel, gasoline, liquefied petroleum gas (LPG), and the like. The rotational motion of the micro/nano-turbine 122 drives a rotation of the compressor 120. The rotational motion of the micro/nano-turbine 122 also drives a rotation of the micro electric generator 124. Compressed air provided by the compressor 120 is then exposed to a heat exchanger (cold side) 142 of a heat exchanger 140, cooling the compressed air. The chilled compressed air is transferred to the combustor chamber 150. The use of chilled compressed air in combination with the fuel 129 improves the efficiency of the combustion process used to drive the micro/nano-turbine 122. The heated air discharged from the turbine is directed towards a heat exchanger (hot side) 144 of the heat exchanger 140.

The arrangement between the compressor 120, the micro/nano-turbine 122 and the micro electric generator 124 can be modified to suit the engineer and/or designer of the system.

The micro electric generator 124 as usual may include a rotating rotor and a stator. The rotor may be a permanent magnet positioned rotatably within the stator and rotates relative to the stator during the operation of micro/nano-turbine 122. Mechanical energy can be transferred to the generator shaft 127 from micro/nano-turbine 122 to the rotor, so that the generator shaft 127, the micro/nano-turbine 122 and the rotor of the micro electric generator 124 rotate in unison at speeds, for example, of up to 100,000 RPM's or more.

The rotational motion of the micro electric generator 124 generates an electric power output. The electric power output can be forwarded directly as a generated electrical power output 132 to a power line or passed through a generated electrical power output 132 before being output as the generated electrical power output 132. The inverted power can be used to operate a wired or wireless communication circuit 131. The wired or wireless communication circuit 131 provides a communication link, which enables conveyance of data respective to the microscale energy cogeneration system 100 to a third party, a monitoring computer, a service person, and the like. The data can include operating data, such as electrical power output 132, consumption of fuel 129, rotational speed of the micro/nano-turbine 122, the compressor 120, and/or the micro electric generator 124, operating temperature, any vibrations, lubrication status, and the like. The wired communication circuit 131 can operated in accordance with any suitable wired communication protocol, including Universal Serial Bus (USB), serial communication, parallel communication, Ethernet, and the like. The wireless communication circuit 131 can operated in accordance with any suitable wireless communication protocol, including Wi-Fi, Bluetooth, Zigbee, any radio frequency (RF), Near Field Communications (NFC), radio frequency identification (RFID), and the like.

The generated electrical power output 132 can be used immediately, stored for later use, or delivered to a network for distribution within the network, such as an electric company grid. Storage of the generated electrical power output 132 can be provided by batteries or any other suitable storage medium.

Air is provided into the microscale energy cogeneration system 100 by an input air to nano-turbine 160. The input air to nano-turbine 160 enters through the ventilation grill 105 of the frontal end cap 104. The hot output gases from the micro/nano-turbine 122 are fed into the heat exchanger (hot side) 144 of the heat exchanger 140 and subsequently forwarded to the heated air exhaust port 107 to exhaust the hot exhaust air (combustor) 162. The hot output gases from the micro/nano-turbine 122 are directed towards the heat exchanger (hot side) 144 of the heat exchanger 140 and are used to draw heat from the heat exchanger (cold side) 142 of the heat exchanger 140.

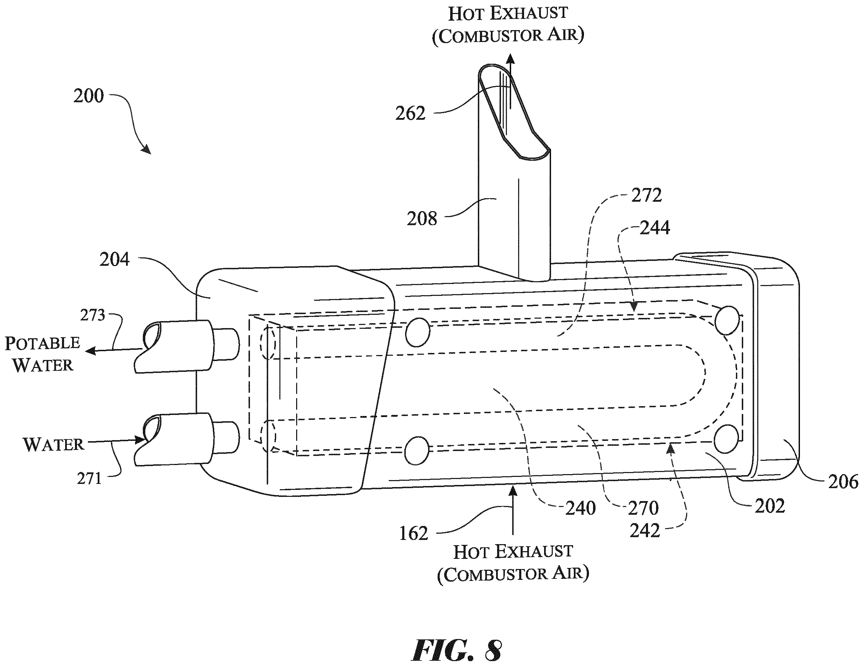

An element of the system is a water processing system 200. Operational components of the water processing system 200 are illustrated in an isometric schematic illustration presented in FIG. 8 and a schematic diagram illustrated in FIG. 10. The water processing system 200 and the microscale energy cogeneration system 100 include a number of like elements. Like elements are numbered in a similar manner, where like elements of the water processing system 200 and the microscale energy cogeneration system 100 are numbered the same, except the reference characters of the elements of the water processing system 200 are preceded by the numeral "2". The housing of the water processing system 200 is similar to the housing of the microscale energy cogeneration system 100. The hot exhaust air (combustor) 162 is transferred from the microscale energy cogeneration system 100 to the water processing system 200 by the exhaust transfer element 108. The hot exhaust air (combustor) 162 is directed towards a heat exchanger (hot side) 242 of a heat exchanger 240 located within an interior of the energy generating system housing 202. Water 271 is supplied to the heat exchanger 240 by a hot water heater or boiler 270. The hot water heater or boiler 270 transitions into a condenser 272.
The condenser 272 passes through a heat exchanger (cold side) 244 of the heat exchanger 240. As the water 271 passes through the hot water heater or boiler 270, and continues into the condenser 272, the output from the water processing system 200 is potable water 273. Since only a portion of the heat from the hot exhaust air (combustor) 162 is absorbed by the heat exchanger 240, the residual heated gases are passed along as a hot exhaust air 262 through an exhaust transfer element 208 of the water processing system 200.

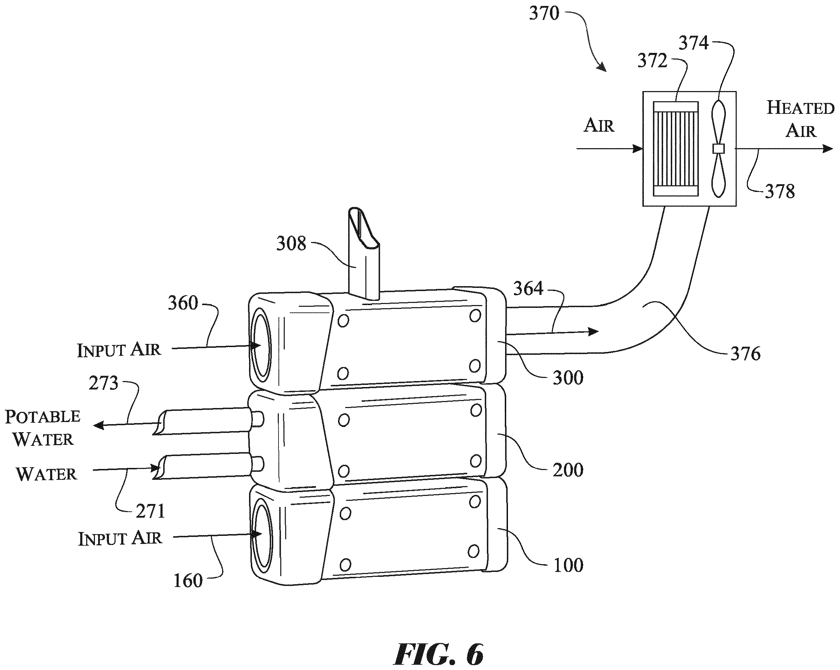

The water processing system 200 can be modified to provide heated air to a water system. For example, the water system may provide hot air to an internal or external hot water heater or water boiler 270. The water can then be forwarded to a separate condenser to produce potable water 273. The water heater would be connected to an exhaust heat conduit from heat exchanger, similar to the heating duct 376 of the heating system 370 (Shown in FIG. 6).

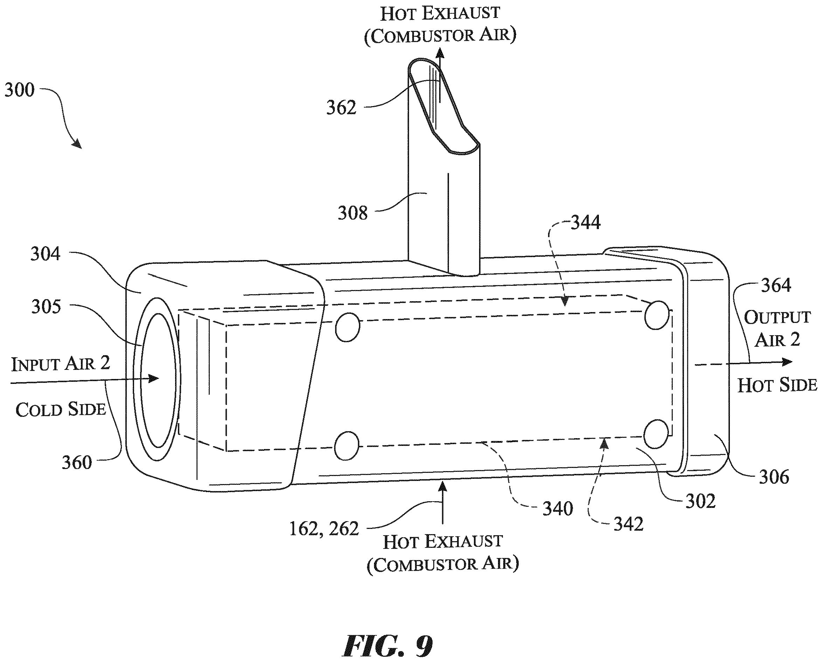

The microscale energy cogeneration system 100 may be additionally used to support an air heating system. Another optional element of the system is an air heating system 300. Operational components of the air heating system 300 being illustrated in an isometric schematic illustration presented in FIG. 9 and a schematic diagram illustrated in FIG. 10. The air heating system 300 and the microscale energy cogeneration system 100 include a number of like elements. Like elements are numbered in a similar manner, where like elements of the air heating system 300 and the microscale energy cogeneration system 100 are numbered the same, except the reference characters of the elements of the air heating system 300 are preceded by the numeral "3". The housing of the air heating system 300 is similar to the housing of the air heating system 300. The hot exhaust air (combustor) 162 or the hot exhaust air 262 is transferred from the microscale energy cogeneration system 100 or the water processing system 200 to the air heating system 300 by the respective exhaust transfer element 108 or the exhaust transfer element 208. The hot exhaust air (combustor) 162, 262 is directed towards a heat exchanger (hot side) 342 of a heat exchanger 340 located within an interior of the energy generating system housing 302. Input air 360 is directed towards the heat exchanger 340. As the input air to the heat exchanger 360 passes across the heat exchanger 340, the temperature of the air increases. The air is discharged as an output air (hot side) 364. The input air to the heat exchanger 360, converting into the output air (hot side) 364 can be contained within a ducting (not shown) that passes through the heat exchanger 340. Conversely, the hot exhaust air (combustor) 162, 262 passes through and/or around the heat exchanger, with the residually heated air being discharged as a hot exhaust air 362 through the exhaust transfer element 208.

A heating system 370 may use exhaust heat to provide exhaust heat and/or output heat 378 for a location or building. The heating system 370 can be connected to a discharge port of the microscale energy cogeneration system 100 to receive the output air (hot side) 164 (configuration understood by description, but not shown) or a discharge port of the air heating system 300 to receive the output air (hot side) 364 by a heating duct 376, as illustrated in FIG. 6. The heating system 370 would receive high temperature exhaust air 162, 262 from the exhaust passage downstream from the micro/nano-turbine 122 or the water processing system 200 for heat transfer. In this manner, the microscale energy cogeneration system may assist with heating requirements for a location or building.

As shown in the exemplary embodiment, the output air (hot side) 364 flows towards a heat exchanger 372. Air is drawn into the heating system 370 by a fan setup 374 and passes through the heat exchanger 372. As the air passes through the heat exchanger 372, the air is warmed. The air can also combine with the output air (hot side) 364 to further increase the overall temperature of the air being discharged as an exhaust and/or output heat 378.

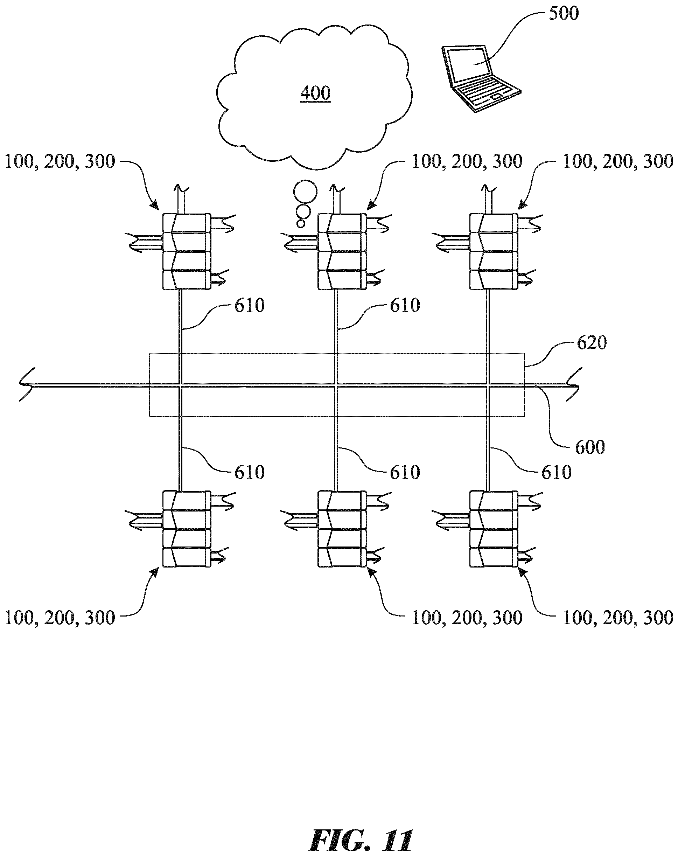

FIG. 11 is a schematic diagram of the microscale energy cogeneration system 100 connected to the electrical power grid 600.

As shown in FIG. 11, the present microscale energy cogeneration system 100 may be attached by a power line 610 to a switchboard controller and meter 620. The switchboard controller and meter assists in the distribution of electric power to a building or location. Generally, the instant load from a microscale energy cogeneration system 100 follows the controller of a standard home electrical box. The present nano-turbine microscale energy cogeneration system 100 is easily compatible with all standard configurations for electrical box controllers.

The system may also be controlled using a Transmission Control Protocol/Internet Protocol (TCP/IP) network 400 through a control center 500. Accordingly, the microscale energy cogeneration system 100 may take energy from the grid 600 if necessary, or provide energy to the grid 600 if the consumption of the local system is lower than the energy produced by it. The main feature of the present system comprises its ability to scale up by connecting several units for the same user, or several units may be interconnected as a grid for balancing out the energy demand of a specific set of users.

As generally noted above, the nano-turbine microscale energy cogeneration system 100 may be integrated into a house, to supplement or substitute an existing energy system. It should be noted that the energy system can be integrated into all types and sizes of buildings and structures as well as locations requiring energy. As would be understood, the system 100 may either include fewer components and systems or may include additional components or systems.

The energy system 100 can integrate any one or more of the heating, cooling, water heating and electrical systems into a mobile and portable unit. As would be understood from the above description, the energy system 100 is powered by different types of fuel. Using nano/microscale energy cogeneration system 100, energy system can fulfill the electrical, heating, cooling and/or hot water, and/or potable water needs for a location, building or structure. It may also be used for hybridizing cars, boating power, outdoor applications, and home use applications.

The home energy system 100 can provide at least part of, if not all the electrical needs of a single location, structure or building, such as house. The energy system 100 is integrated with the grid 600 at a junction box or switchboard controller and meter to distribute electrical load in a location. Either the energy system or grid 600 can be the primary system with the other system serving as an auxiliary or support system. When the energy system produces more electricity than required, the electrical load can be stored in a storage device, such as some type of battery, or returned back to the power grid 600. In systems that are not connected to the electric company, like a system setup located in a remote location, surplus electrical load can be delivered to a specific location over a local grid 600. Alternatively, if surplus electrical load is returned to the grid 600, a house with surplus electricity can designate a specific house or location to receive the electrical load through the electric company's grid. This sharing of electrical loads allows two locations to exchange electrical loads at a cost lower than purchasing from the electric company.

The present system has several applications, including but not limited to:
(a) Hybridization of electric vehicles
(b) Domestic production of power and heat
(c) Smart power grids
(d) Boating power and heat supply
(e) Outdoor applications

It will be understood that the embodiments shown in the drawings and described above are merely for illustrative purposes, and are not intended to limit the scope of the invention, which is defined by the claims.

### Reference Element List

### Ref, No. Description

- 100: microscale energy cogeneration system
- 102: energy generating system housing
- 103: component mounting hardware
- 104: frontal end cap
- 105: ventilation grill
- 106: rear end cap
- 107: heated air exhaust port
- 108: exhaust transfer element
- 109: energy generating system foot
- 120: compressor
- 122: micro/nano-turbine
- 124: micro electric generator
- 126: turbine shaft
- 127: generator shaft
- 129: fuel supply
- 130: inverter central processing unit (CPU)
- 131: wired or wireless communication circuit
- 132: generated electrical power output
- 140: heat exchanger
- 142: heat exchanger (cold side)
- 144: heat exchanger (hot side)
- 150: combustor chamber
- 160: input air to nano-turbine
- 162: hot exhaust air (combustor)
- 164: output air (hot side)
- 170: handle
- 200: water processing system
- 202: energy generating system housing
- 203: component mounting hardware
- 204: frontal end cap
- 205: ventilation grill
- 206: rear end cap
- 207: heated air exhaust port
- 208: exhaust transfer element
- 209: energy generating system foot
- 240: heat exchanger
- 242: heat exchanger (hot side)
- 244: heat exchanger (cold side)
- 260: input air to nano-turbine
- 262: hot exhaust air
- 264: output air (hot side)
- 270: hot water heater or boiler
- 271: water
- 272: condenser
- 273: potable water
- 300: air heating system
- 302: energy generating system housing
- 303: component mounting hardware
- 304: frontal end cap
- 305: ventilation grill
- 306: rear end cap
- 307: heated air exhaust port
- 308: exhaust transfer element
- 309: energy generating system foot
- 340: heat exchanger
- 342: heat exchanger (hot side)
- 344: heat exchanger (cold side)
- 360: input air to the heat exchanger
- 362: hot exhaust air
- 364: output air (hot side)
- 370: heating system
- 372: heat exchanger
- 374: fan setup
- 376: heating duct
- 378: exhaust and/or output heat
- 400: Transmission Control Protocol/Internet Protocol (TCP/IP) network
- 500: control center
- 600: power grid
- 610: line
- 620: switchboard controller and meter

## Claims

1. A portable microscale distributed energy cogeneration modular system comprising:
▪ a first unit (100) comprising a first energy generating system housing (102) having an air inflow orifice, an air discharge orifice, said first housing (102) internally receiving
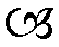 a micro-turbine (122);
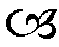 a micro electric generator (124) in rotational communication with the micro-turbine (122);
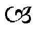 a heat exchanger (140) having a cold side (142) and a hot side (144);
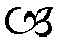 a compressor (120) arranged to receive air from the air inflow orifice and to provide compressed air to the cold side (142) of the heat exchanger (140);
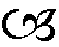 a combustor chamber (150) arranged to receive the compressed air from the cold side (142) of the heat exchanger (140), the combustor chamber being arranged to utilize fuel in conjunction with the compressed air to operate the micro-turbine;
wherein a first flow (164) of exhausted hot air from the micro-turbine (122) is discharged through the air discharge orifice of the first energy generating system housing (102);
wherein the micro electric generator (124) is adapted to produce electric power output during operation of the microscale distributed energy cogeneration modular system,
▪ a second unit (200) comprising a water system adapted to convert supplied water into potable water during operation of said first unit (100), the water system being in communication with a second flow (162) of exhaust hot air discharged from the micro-turbine (122), the water system comprising a water boiler (270) and a condenser (272) to produce potable water, said water boiler (270) and said condenser (272) being housed in a second housing (202),
**characterized in that**
the water system is in communication with said second flow (162) of exhaust hot air discharged from the micro-turbine (122) by means of an exhaust passage (108) placed downstream said micro-turbine (102) and said heat exchanger (140), said exhaust passage (108) comprising an heated air exhaust port (107) formed on each of said first (102) and second (202) housing so as to couple the first (100) and second (100) unit at said ports, and **in that** the portable microscale distributed energy cogeneration modular system (100) is suitable to be interconnected with other identical systems, in electric communication with a common power distribution grid by a switchboard controller and meter (620), and adapted to balance out an energy demand of the different users.

2. The portable microscale distributed energy cogeneration modular system as recited in claim 1, wherein the micro electric generator is adapted to produce alternating current.

3. The portable microscale distributed energy cogeneration modular system as recited in claim 1, further comprising a third unit (300), said third unit comprising an air heating system in communication with the second flow of exhaust hot air discharged from the micro-turbine (122), the air heating system comprising a second heat exchanger (372) and fan setup (374) configured to heat air flowing therethrough.

4. The portable microscale distributed energy cogeneration modular system as recited in claim 1, wherein the fuel for the portable microscale distributed energy cogeneration modular system is one of natural gas, diesel, gasoline, liquefied petroleum gas (LPG).

5. The portable microscale distributed energy cogeneration modular system as recited in claim 1 and configured to cause a shaft (126) of the micro-turbine and a rotor of the micro electric generator to rotate in unison during operation of the portable microscale distributed energy cogeneration modular system.

6. The portable microscale distributed energy cogeneration modular system as recited in claim 1 and suitable to be installed within one of a hybridizing car, a boat, an outdoor application, a building or a home.

7. The portable microscale distributed energy cogeneration modular system as recited in claim 1 and suitable to be in signal communication with a switchboard controller and meter (620).

8. The portable microscale distributed energy cogeneration modular system as recited in claim 1 and suitable to be in signal communication with a control center by way of a Transmission Control Protocol/Internet Protocol (TCP/IP) network.

9. The portable microscale distributed energy cogeneration modular system as recited in claim 1, wherein the microscale distributed energy cogeneration system is suitable to be in electric communication with an electrical power grid.

10. The portable microscale distributed energy cogeneration modular system as recited in claim 1 and suitable to be in electric communication with an electrical power grid, wherein the portable microscale distributed energy cogeneration modular system is adapted to operate in accordance with at least one of:
(a) to provide excess electric power to the electrical power grid
(b) to consume electric power from the electrical power grid in a condition where the consumption of power from the portable microscale distributed energy cogeneration modular system is lower than the energy produced by the portable microscale distributed energy cogeneration modular system.

11. A method of providing electric power, the method comprising steps of:
• obtaining a portable microscale distributed energy cogeneration modular system according to any of the claims from 1 to 10,
• providing compressed air to the cold side (142) of the heat exchanger (140);
• running the micro-turbine (122) using an output from the combustor chamber (150), wherein the combustor chamber is operated by a combination of fuel and compressed air received from the cold side of the heat exchanger;
• driving a rotor of the micro electric generator (124) in a rotational motion, wherein the micro electric generator is driven by the running of the micro-turbine; and
• producing an electric power output from the micro electric generator,
wherein the conversion of the supplied water in potable water comprises:
o delivering the supplied water to the water system,
o boiling the supplied water using the water boiler (270), wherein the water boiler is heated by the second flow (162) of exhaust hot air discharged from the micro-turbine (122) and subsequently
o cooling the boiled water in the condenser (272),
the method further comprising a step of:
• interconnecting several portable microscale distributed energy cogeneration systems of different users as a set; and
• managing electric power generated by the interconnected several portable energy cogeneration units to balance out an energy demand of the different users.

12. The method of providing power as recited in claim 11, wherein the step of producing an electric power output from the micro electric generator produces an alternating current.

13. The method of providing power as recited in claim 11, the portable microscale distributed energy cogeneration modular system further comprising a third unit (300) comprising an air heating system in communication with the second flow of exhaust air discharged from the micro-turbine, the method further comprising steps of:
o heating air by passing the air through the air heating system, and
o distributing the heated air using a fan.

14. The method of providing power as recited in claim 11, the method further comprising a step of:
fueling the portable microscale energy cogeneration modular system using one of natural gas, diesel, gasoline, and LPG.

15. The method of providing power as recited in claim 11, the method further comprising a step of:
rotating a shaft of the micro-turbine and a rotor of the micro electric generator in unison during operation of the portable microscale distributed energy cogeneration modular system.

16. The method of providing power as recited in claim 11, the method further comprising a step of:
providing excess electric power to the electrical power grid in a condition where the consumption of the electric power output is lower than the electric power output produced by the portable microscale distributed energy cogeneration modular system; and
obtaining electric power from the electrical power grid in a condition where the consumption of the electric power output is greater than the electric power output produced by the portable microscale distributed energy cogeneration modular system.

## Patentansprüche

1. Tragbares modulares mikroskaliges verteiltes Kraft-Wärme-Kopplungssystem, umfassend:
• eine erste Einheit (100), umfassend ein erstes Energieerzeugungssystemgehäuse (102) mit einer Lufteinströmungsöffnung, einer Luftausstoßöffnung, wobei das erste Gehäuse (102) intern empfängt
- eine Mikroturbine (122);
- einen mikroelektrischen Generator (124) in Drehkommunikation mit der Mikroturbine (122);
- einen Wärmetauscher (140) mit einer kalten Seite (142) und einer heißen Seite (144);
- einen Kompressor (120), der angeordnet ist, um Luft von der Lufteinströmungsöffnung zu empfangen und Druckluft an die kalte Seite (142) des Wärmetauschers (140) bereitzustellen;
- eine Brennkammer (150), die angeordnet ist, um die Druckluft von der kalten Seite (142) des Wärmetauschers (140) zu empfangen, wobei die Brennkammer angeordnet ist, um Brennstoff in Verbindung mit der Druckluft zu verwenden, um die Mikroturbine zu betreiben;
wobei eine erste Strömung (164) von heißer Abluft aus der Mikroturbine (122) durch die Luftausstoßöffnung des ersten Energieerzeugungssystemgehäuses (102) ausgestoßen wird;
wobei der mikroelektrische Generator (124) angepasst ist, um während des Betriebs des modularen mikroskaligen verteilten Kraft-Wärme-Kopplungssystem eine elektrische Leistungsabgabe zu erzeugen,
• eine zweite Einheit (200), umfassend ein Wassersystem, das dazu angepasst ist, zugeführtes Wasser während des Betriebs der ersten Einheit (100) in Trinkwasser umzuwandeln, wobei das Wassersystem in Kommunikation mit einer zweiten Strömung (162) von heißer Abluft steht, die von der Mikroturbine (122) ausgestoßen wird, wobei das Wassersystem einen Wasserkessel (270) und einen Kondensator (272) umfasst, um Trinkwasser zu erzeugen, wobei der Wasserkessel (270) und der Kondensator (272) in einem zweiten Gehäuse (202) untergebracht sind,
**dadurch gekennzeichnet, dass** das Wassersystem in Kommunikation mit der zweiten Strömung (162) von heißer Abluft, die von der Mikroturbine (122) mittels eines Auslasskanals (108) ausgestoßen wird, der stromabwärts der Mikroturbine (102) und des Wärmetauschers (140) angeordnet ist, wobei der Auslasskanal (108) eine Heißluftauslassöffnung (107) umfasst, die jeweils sowohl an dem ersten (102) als auch an dem zweiten (202) Gehäuse ausgebildet ist, um die erste (100) und die zweite (100) Einheit an den Öffnungen zu koppeln, und dadurch, dass das tragbare modulare mikroskalige verteilte Kraft-Wärme-Kopplungssystem (100) dazu geeignet ist, mit anderen identischen Systemen miteinander verbunden zu werden, in elektrischer Kommunikation mit einem gemeinsamen Stromverteilungsnetz durch eine Schaltanlagensteuerung und einen Zähler (620) steht und dazu angepasst ist, einen Energiebedarf der verschiedenen Benutzer auszugleichen.

2. Tragbares modulares mikroskaliges verteiltes Kraft-Wärme-Kopplungssystem nach Anspruch 1, wobei der mikroelektrische Generator angepasst ist, um Wechselstrom zu erzeugen.

3. Tragbares modulares mikroskaliges verteiltes Kraft-Wärme-Kopplungssystem nach Anspruch 1, das ferner eine dritte Einheit (300) umfasst, wobei die dritte Einheit ein Luftheizsystem umfasst, das mit der zweiten Strömung heißer Abluft in Kommunikation steht, der von der Mikroturbine (122) ausgestoßen wird, wobei das Luftheizsystem einen zweiten Wärmetauscher (372) und einen Gebläseaufbau (374) umfasst, der ausgelegt ist, um durchströmende Luft zu erwärmen.

4. Tragbares modulares mikroskaliges verteiltes Kraft-Wärme-Kopplungssystem nach Anspruch 1, wobei der Brennstoff für das tragbare modulare mikroskalige verteilte Kraft-Wärme-Kopplungssystem entweder Erdgas, oder Diesel, Benzin, Flüssiggas (LPG) ist.

5. Tragbares modulares mikroskaliges verteiltes Kraft-Wärme-Kopplungssystem nach Anspruch 1, das so ausgelegt ist, dass es bewirkt, dass sich eine Welle (126) der Mikroturbine und ein Rotor des mikroelektrischen Generators während des Betriebs des tragbaren modularen mikroskaligen verteilten Kraft-Wärme-Kopplungssystem gleichzeitig drehen.

6. Tragbares modulares mikroskaliges verteiltes Kraft-Wärme-Kopplungssystem nach Anspruch 1, das geeignet ist, in einem von: einem hybridisierenden Auto, einem Boot, einer Außenanwendung, einem Gebäude oder einem Haus installiert zu werden.

7. Tragbares modulares mikroskaliges verteiltes Kraft-Wärme-Kopplungssystem nach Anspruch 1, das geeignet ist, in Signalkommunikation mit einer Schalttafelsteuerung und einem Zähler (620) zu stehen.

8. Tragbares modulares mikroskaliges verteiltes Kraft-Wärme-Kopplungssystem nach Anspruch 1, das geeignet ist, über ein TCP/IP (Transmission Control Protocol/Internet Protocol)-Netzwerk in Signalkommunikation mit einer Steuerzentrale zu stehen.

9. Tragbares modulares mikroskaliges verteiltes Kraft-Wärme-Kopplungssystem nach Anspruch 1, wobei das mikroskalige verteilte Kraft-Wärme-Kopplungssystem geeignet ist, in elektrischer Kommunikation mit einem Stromnetz zu stehen.

10. Tragbares modulares mikroskaliges verteiltes Kraft-Wärme-Kopplungssystem nach Anspruch 1, das dazu geeignet ist, in elektrischer Kommunikation mit einem Stromnetz zu stehen, wobei das modulare mikroskalige verteilte Kraft-Wärme-Kopplungssystem dazu angepasst ist, gemäß mindestens einem von Folgendem zu arbeiten:
(a) das Stromnetz mit überschüssiger elektrischer Leistung zu versorgen
(b) elektrische Leistung aus dem Stromnetz in einem Zustand zu verbrauchen, in dem der Leistungsverbrauch aus dem tragbaren modularen mikroskaligen verteilten Kraft-Wärme-Kopplungssystem geringer ist als die Energie, die vom tragbaren modularen mikroskaligen verteilten Kraft-Wärme-Kopplungssystem erzeugt wird.

11. Verfahren zum Bereitstellen elektrischer Leistung, wobei das Verfahren folgende Schritte umfasst:
• Erhalten eines tragbaren modularen mikroskaligen verteilten Kraft-Wärme-Kopplungssystem nach einem der Ansprüche 1 bis 10,
• Bereitstellen von Druckluft an die kalte Seite (142) des Wärmetauschers (140);
• Betreiben der Mikroturbine (122) unter Verwendung einer Abgabe von der Brennkammer (150), wobei die Brennkammer durch eine Kombination aus Brennstoff und Druckluft betrieben wird, die von der kalten Seite des Wärmetauschers empfangen wird;
• Antreiben eines Rotors des mikroelektrischen Generators (124) in einer Drehbewegung, wobei der mikroelektrische Generator durch den Lauf der Mikroturbine angetrieben wird; und
• Erzeugen einer elektrischen Leistungsabgabe von dem mikroelektrischen Generator,
wobei die Umwandlung des zugeführten Wassers in Trinkwasser Folgendes umfasst:
o Fördern des zugeführten Wassers an das Wassersystem,
o Kochen des zugeführten Wassers unter Verwendung des Wasserkessels (270), wobei der Wasserkessel durch die zweite Strömung (162) von heißer Abluft beheizt wird, die von der Mikroturbine (122) ausgestoßen wird, und anschließend
o Kühlen des gekochten Wassers in dem Kondensator (272), wobei das Verfahren ferner folgende Schritte umfasst:
• Verbinden mehrerer tragbarer mikroskaliger verteilter Kraft-Wärme-Kopplungssysteme verschiedener Benutzer als ein Set miteinander; und
• Verwalten der elektrischen Leistung, die von den miteinander verbundenen mehreren tragbaren Kraft-Wärme-Kopplungseinheiten erzeugt wird, um einen Energiebedarf der verschiedenen Benutzer auszugleichen.

12. Verfahren zum Bereitstellen von Leistung nach Anspruch 11, wobei der Schritt zum Erzeugen einer elektrischen Leistungsabgabe, die von dem mikroelektrischen Generator abgegeben wird, einen Wechselstrom erzeugt.

13. Verfahren zum Bereitstellen von Leistung nach Anspruch 11, wobei das tragbare modulare mikroskalige verteilte Kraft-Wärme-Kopplungssystem ferner eine dritte Einheit (300) umfasst, die ein Luftheizsystem in Kommunikation mit der zweiten Abluftströmung umfasst, die von der Mikroturbine ausgestoßen wird, wobei das Verfahren ferner folgende Schritte umfasst:
o Erhitzen der Luft durch Durchleiten der Luft durch das Luftheizungssystem, und
o Verteilen der beheizten Luft mit einem Gebläse.

14. Verfahren zum Bereitstellen von Leistung nach Anspruch 11, wobei das Verfahren ferner folgenden Schritt umfasst:
Betanken des tragbaren modularen mikroskaligen verteilten Kraft-Wärme-Kopplungssystem mit Erdgas, Diesel, Benzin oder Flüssiggas.

15. Verfahren zum Bereitstellen von Leistung nach Anspruch 11, wobei das Verfahren ferner folgenden Schritt umfasst:
Drehen einer Welle der Mikroturbine und eines Rotors des mikroelektrischen Generators gleichzeitig während des Betriebs des tragbaren modularen mikroskaligen verteilten Kraft-Wärme-Kopplungssystem.

16. Verfahren zum Bereitstellen von Leistung nach Anspruch 11, wobei das Verfahren ferner folgende Schritte umfasst:
Bereitstellen überschüssiger elektrischer Leistung an das Stromnetz in einem Zustand, in dem der Verbrauch der elektrischen Leistungsabgabe niedriger ist als die elektrische Leistungsabgabe, die von dem tragbaren modularen mikroskaligen verteilten Kraft-Wärme-Kopplungssystem erzeugt wird; und
Erhalten elektrischer Leistung von dem Stromnetz in einem Zustand, in dem der Verbrauch der elektrischen Leistungsabgabe größer ist als die elektrische Leistungsabgabe, die von dem tragbaren modularen mikroskaligen verteiltes Kraft-Wärme-Kopplungssystem erzeugt wird.

## Revendications

1. Système modulaire portable de cogénération d'énergie distribuée à micro-échelle, comprenant :
• une première unité (100), comprenant un premier logement de système de génération d'énergie (102) comportant un orifice d'admission d'air, un orifice de refoulement d'air, ledit premier logement (102) recevant intérieurement
- une micro-turbine (122) ;
- un micro-générateur électrique (124) en communication rotative avec la micro-turbine (122) ;
- un échangeur de chaleur (140) comportant un côté froid (142) et un côté chaud (144) ;
- un compresseur (120) disposé pour recevoir de l'air provenant de l'orifice d'admission d'air et pour fournir de l'air comprimé au côté froid (142) de l'échangeur de chaleur (140) ;
- une chambre de combustion (150) disposée pour recevoir l'air comprimé du côté froid (142) de l'échangeur de chaleur (140), la chambre de combustion étant disposée pour utiliser le carburant conjointement avec l'air comprimé pour faire fonctionner la micro-turbine ;
dans lequel un premier flux (164) d'air chaud évacué de la micro-turbine (122) est refoulé par l'orifice de refoulement d'air du premier logement du système de génération d'énergie (102) ;
dans lequel le micro-générateur électrique (124) est adapté pour produire de l'énergie électrique de sortie pendant le fonctionnement du système modulaire de cogénération d'énergie distribuée à micro-échelle,
• une deuxième unité (200), comprenant un système d'eau adapté pour convertir l'eau fournie en eau potable pendant le fonctionnement de ladite première unité (100), le système d'eau étant en communication avec un deuxième flux (162) d'air chaud évacué refoulé de la micro-turbine (122), le système d'eau comprenant une chaudière à eau (270) et un condensateur (272) pour produire de l'eau potable, ladite chaudière à eau (270) et ledit condensateur (272) étant logés dans un deuxième logement (202),
**caractérisé en ce que** le système d'eau est en communication avec ledit deuxième flux (162) d'air chaud évacué refoulé de la micro-turbine (122) au moyen d'un passage d'évacuation (108) placé en aval de ladite micro-turbine (102) et dudit échangeur de chaleur (140), ledit passage d'évacuation (108) comprenant un orifice d'évacuation d'air chauffé (107) formé sur chacun desdits premier (102) et deuxième (202) logements de manière à coupler la première (100) et la deuxième (100) unité en correspondance desdits orifices, et **en ce que** le système modulaire portable de cogénération d'énergie distribuée à micro-échelle (100) est adapté pour être interconnecté avec d'autres systèmes identiques, en communication électrique avec un réseau de distribution d'énergie commun par un contrôleur de tableau de distribution et un compteur (620), et adapté pour équilibrer une demande d'énergie des différents utilisateurs.

2. Système modulaire portable de cogénération d'énergie distribuée à micro-échelle selon la revendication 1, dans lequel le micro-générateur électrique est adapté pour produire un courant alternatif.

3. Système modulaire portable de cogénération d'énergie distribuée à micro-échelle selon la revendication 1, comprenant de plus une troisième unité (300), ladite troisième unité comprenant un système de chauffage de l'air en communication avec le deuxième flux d'air chaud évacué refoulé de la micro-turbine (122), le système de chauffage de l'air comprenant un deuxième échangeur de chaleur (372) et une configuration de ventilateur (374) configurée pour chauffer l'air qui circule à travers celle-ci.

4. Système modulaire portable de cogénération d'énergie distribuée à micro-échelle selon la revendication 1, dans lequel le carburant pour le système modulaire portable de cogénération d'énergie distribuée à micro-échelle est l'un des carburants parmi le gaz naturel, le diesel, l'essence, le gaz de pétrole liquéfié (GPL).

5. Système modulaire portable de cogénération d'énergie distribuée à micro-échelle selon la revendication 1 et configuré pour faire tourner simultanément un arbre (126) de la micro-turbine et un rotor du micro-générateur électrique pendant le fonctionnement du système modulaire portable de cogénération d'énergie distribuée à micro-échelle.

6. Système modulaire portable de cogénération d'énergie distribuée à micro-échelle selon la revendication 1 et adapté pour être installé dans une voiture hybride, un bateau, une application extérieure, un bâtiment ou une maison.

7. Système modulaire portable de cogénération d'énergie distribuée à micro-échelle selon la revendication 1 et adapté pour être en communication de signal avec un contrôleur de tableau de distribution et un compteur (620) .

8. Système modulaire portable de cogénération d'énergie distribuée à micro-échelle selon la revendication 1 et adapté pour être en communication de signal avec un centre de contrôle par l'intermédiaire d'un réseau TCP/IP (protocole de contrôle de transmission/protocole Internet) .

9. Système modulaire portable de cogénération d'énergie distribuée à micro-échelle selon la revendication 1, dans lequel le système de cogénération d'énergie distribuée à micro-échelle est adapté pour être en communication électrique avec un réseau électrique maillé.

10. Système modulaire portable de cogénération d'énergie distribuée à micro-échelle selon la revendication 1 et adapté pour être en communication électrique avec un réseau électrique maillé, dans lequel le système modulaire portable de cogénération d'énergie distribuée à micro-échelle est adapté pour fonctionner selon au moins l'une des manières suivantes :
(a) fournir de l'énergie électrique excédentaire au réseau électrique maillé
(b) consommer l'énergie électrique du réseau électrique maillé dans une condition où la consommation d'énergie du système modulaire portable de cogénération d'énergie distribuée à micro-échelle est inférieure à l'énergie produite par le système modulaire portable de cogénération d'énergie distribuée à micro-échelle.

11. Procédé de fourniture d'énergie électrique, le procédé comprenant les étapes de :
• obtenir un système modulaire portable de cogénération d'énergie distribuée à micro-échelle selon l'une quelconque des revendications de 1 à 10 ;
• fournir de l'air comprimé au côté froid (142) de l'échangeur de chaleur (140) ;
• faire fonctionner la micro-turbine (122) en utilisant une sortie de la chambre de combustion (150), dans lequel la chambre de combustion est actionnée par une combinaison de carburant et d'air comprimé reçu du côté froid de l'échangeur de chaleur ;
• entraîner un rotor du micro-générateur électrique (124) dans un mouvement de rotation, dans lequel le micro-générateur électrique est entraîné par le fonctionnement de la micro-turbine ; et
• produire une énergie électrique de sortie à partir du micro-générateur électrique,
dans lequel la conversion de l'eau fournie en eau potable comprend :
o acheminer l'eau fournie au système d'eau,
o faire bouillir l'eau fournie à l'aide de la chaudière à eau (270), dans lequel la chaudière à eau est chauffée par le deuxième flux (162) d'air chaud évacué refoulé de la micro-turbine (122) et ensuite
o refroidir l'eau bouillie dans le condensateur (272), le procédé comprenant de plus les étapes de :
• interconnecter plusieurs systèmes portables de cogénération d'énergie distribuée à micro-échelle de différents utilisateurs en tant qu'ensemble ; et
• gérer l'énergie électrique générée par plusieurs unités portables de cogénération d'énergie interconnectées afin d'équilibrer une demande énergétique des différents utilisateurs.

12. Procédé de fourniture d'énergie selon la revendication 11, dans lequel l'étape de production d'une énergie électrique de sortie à partir du micro-générateur électrique produit un courant alternatif.

13. Procédé de fourniture d'énergie selon la revendication 11, le système modulaire portable de cogénération d'énergie distribuée à micro-échelle comprenant de plus une troisième unité (300) comprenant un système de chauffage de l'air en communication avec le deuxième flux d'air évacué refoulé de la micro-turbine, le procédé comprenant de plus les étapes de :
o chauffer l'air en faisant passer l'air à travers le système de chauffage de l'air, et
o distribuer l'air chauffé à l'aide d'un ventilateur.

14. Procédé de fourniture d'énergie selon la revendication 11, le procédé comprenant de plus une étape de :
alimenter le système modulaire portable de cogénération d'énergie à micro-échelle en utilisant un carburant parmi le gaz naturel, le diesel, l'essence et le GPL.

15. Procédé de fourniture d'énergie selon la revendication 11, le procédé comprenant de plus une étape de :
faire tourner un arbre de la micro-turbine et un rotor du micro-générateur électrique simultanément pendant le fonctionnement du système modulaire portable de cogénération d'énergie distribuée à micro-échelle.

16. Procédé de fourniture d'énergie selon la revendication 11, le procédé comprenant de plus les étapes de :
fournir une énergie électrique excédentaire au réseau électrique maillé lorsque la consommation d'énergie électrique de sortie est inférieure à l'énergie électrique de sortie produite par le système modulaire portable de cogénération d'énergie distribuée à micro-échelle ; et
obtenir de l'énergie électrique du réseau électrique maillé lorsque la consommation d'énergie électrique de sortie est supérieure à l'énergie électrique de sortie produite par le système modulaire portable de cogénération d'énergie distribuée à micro-échelle.
